# EUROPEAN PATENT SPECIFICATION

(11) **EP 4 363 867 B1**
(45) Date of publication and mention of the grant of the patent: **24.12.2025**
(21) Application number: 22735564.1
(22) Date of filing: 10.06.2022
(51) Int. Cl.: G01Q 10/04, G01Q 20/02, G01Q 70/06

(54) **LIGHTING SYSTEM FOR MULTI-PROBE MICROSCOPE**
BELEUCHTUNGSVORRICHTUNG FÜR MEHRSONDENMIKROSKOP
SYSTÈME D'ILLUMINATION POUR UN MICROSCOPE À SONDES MULTIPLES

(30) Priority: 01.07.2021 GB 202109549
(43) Date of publication of application: 08.05.2024
(73) Proprietor: Infinitesima Limited, Abingdon, Oxfordshire OX14 1RG (GB)
(72) Inventor: HUMPHRIS, Andrew, Abingdon, Oxfordshire OX14 1RG (GB); HOLE, John Patrick, Abingdon, Oxfordshire OX14 1RG (GB); PRICE, Christopher, Abingdon, Oxfordshire OX14 1RG (GB)
(74) Representative: Ribeiro, James Michael
(86) International application number: PCT/GB2022/051465
(87) International publication number: WO 2023/275507

(56) References cited:
- US-A1- 2005 117 163
- US-A1- 2015 219 686
- LANG H P ET AL: "Sequential position readout from arrays of micromechanical cantilever sensors", APPLIED PHYSICS LETTERS, AMERICAN INSTITUTE OF PHYSICS, 2 HUNTINGTON QUADRANGLE, MELVILLE, NY 11747, vol. 72, no. 3, 19 January 1998 (1998-01-19), pages 383 - 385, XP012020582, ISSN: 0003-6951, DOI: 10.1063/1.120749

## Description

### FIELD OF THE INVENTION

The present invention relates to a probe microscope with a probe array, and a lighting system configured to generate light beams to actuate or detect the probes. The invention also relates to an associated probe actuation method.

### BACKGROUND OF THE INVENTION

Multiprobe scanning probe microscope using a probe-array head; Fengmin Sun, Zhenyu Zhue and Long Ma; Rev. Sci. Instrum. 91, 123702 (2020); https://doi.org/10.1063/5.0015897 discloses a microelectromechanical system (MEMS)-based multiprobe scanning probe microscope (SPM) to improve imaging efficiency. The SPM head contains seven identical MEMS probes, and each of them integrates a displacement sensor and a Z-axis actuator

Another approach is used in US 2015/0219686 A1, which discloses a method of detecting the positions of a plurality of probes. An input beam is directed into an optical device and transformed into a plurality of output beamlets which are not parallel with each other. Each output beamlet is split into a detection light beam and an associated reference beamlet. Each of the detection light beams is directed onto an associated one of the probes with an objective lens to generate a reflected beamlet which is combined with its associated reference beamlet to generate an interferogram. Each interferogram is measured to determine the position of an associated one of the probes. A similar method is used to actuate a plurality of probes. A scanning motion is generated between the probes and the sample. An input beam is directed into an optical device and transformed into a plurality of actuation beamlets which are not parallel with each other.

In the system of US 2015/0219686 A1, a spatial light modulator (SLM) can independently control the intensities of individual ones of the actuation beamlets, but only at a low modulation rate typically 100s of Hz but no higher than 1 kHz.

US 2005/0117163 discloses a scanning probe system which may be modified for array cantilever operation. FIG. 7 of US 2005/0117163 illustrates two alternative array light source units; two alternative arrangements of array cantilever probes; and two alternative array photodetector units. These units can be arranged in a one-dimensional or two-dimensional array fashion.

In Figure 7 of US2005/0117163 a lens is shown between the light sources and the probe. A problem with the optical arrangement Figure 7 of US2005/0117163 is that if the light beams from the light sources are parallel, then the lens will focus them all onto the same probe, rather than focusing each light beam onto a different probe. Sequential position readout from arrays of micromechanical cantilever sensors; H. P. Lang et al Appl. Phys. Lett 72 (3) 19 January 1998 discloses a sequential position readout from a microfabricated array of eight cantilever-type sensors.

### SUMMARY OF THE INVENTION

Claim 1 of the invention provides a probe microscope comprising: a probe array comprising an array of probes, each probe comprising a cantilever and a probe tip; a lighting system comprising a plurality of light sources, wherein each light source is configured to output a respective light beam; a collector lens configured to collect the light beams from the light sources; and an objective lens configured to receive the light beams from the collector lens and focus each light beam onto the cantilever of a respective one of the probes.

The present invention provides a probe microscope with an improved lighting system for probe illumination, compared with US 2015/0219686 A1. Unlike US 2015/0219686 A1, the lighting system comprises a plurality of light sources, which may be light generators (such as lasers), optical fibres or any other light source.

An advantage of the present invention is that a spatial light modulator (SLM) may not be required as part of the lighting system, so the invention may avoid problems associated with SLMs, such as low modulation rate.

Another advantage of the present invention is that the probe microscope can be easily adapted to accommodate a change in pitch between the probe tips, by changing a focal length of either the collector lens or the objective lens.

Unlike the arrangement in US2005/0117163, a collector lens is provided in addition to an objective lens. The collector lens ensures that the light beams are not focused onto the same point, but rather each light beam is focused onto the cantilever of a respective one of the probes.

The term "light source" is used herein to encompass not only an active light generator element (such as a laser) where light originates but also a passive element (such as an optical fibre) which passes on light originating elsewhere. Therefore each light source may or may not comprise a light generator (such as a laser) configured to generate and emit light.

Optionally the light beams are actuation light beams, the light sources are actuation light sources, the collector lens is an actuation collector lens, the lighting system is configured to modulate a power of the actuation light beams to actuate the probes, and the lighting system is configured to modulate the power of some or all of the actuation light beams independently.

Optionally the lighting system is configured so that the modulation of the power of the actuation light beams causes the cantilevers to move (for instance by bending, unbending, twisting or untwisting).

Optionally each actuation light beam causes its respective probe to heat and deform by the photothermal effect. The term "photothermal effect" is used herein to refer in general terms to the deformation of the probe caused by the heating of the probe, such heating of the probe being induced by its illumination. Alternatively the actuation light beams may cause them to deform by some other mechanism such as by radiation pressure. Radiation pressure can be used in combination with highly reflective probe coatings and ideally some form of cavity, possibly a mirror attached to the probe.

Each probe may comprise two or more materials with different thermal expansion coefficients which are arranged such that when the probe is heated by its respective actuation light beam it deforms to move the probe relative to a sample. Alternatively each probe may be made of a single material - in this case it will deform due to a thermal gradient introduced by heating a region of the probe and thus inducing mechanical stress, typically between a side of the probe which is heated by the actuation light beam and the opposite side of the probe.

Optionally each actuation light source comprises a light generator (such as a laser) configured to generate and emit light, the light generators are configured to modulate the power of the actuation light beams to actuate the probes, and some or all of the light generators are configured to modulate the power of their actuation light beams independently.

Optionally the lighting system comprises two or more modulators, and each modulator is configured to modulate a power of one or more of the actuation light beams.

Optionally each actuation light source comprises an optical fibre; and each of the modulators is configured to receive light, modulate a power of the light to generate power-modulated light, and direct the power-modulated light into one or more of the optical fibres.

Optionally the probe microscope further comprises a signal generator configured to generate two or more power-modulation signals, wherein the lighting system is configured to modulate the power of the actuation light beams on the basis of the power-modulation signals.

Optionally the probe microscope further comprises a detection system configured to determine the positions of the probes. The detection system may be an interferometer-based optical detection system of the kind described in US 2015/0219686 A1, an optical lever-based detection system, or any other type of detection system. Alternatively, no detection system may be required.

Optionally the light beams generated by the lighting system are detection light beams, the light sources are detection light sources, the probes are configured to reflect the detection light beams to generate sensing light beams, and the probe microscope further comprises a sensing system configured to receive the sensing light beams and determine positions of the probes from the sensing light beams.

Optionally the sensing light beams are received by the objective lens and relayed from the objective lens to the sensing system.

Optionally the detection system comprise a plurality of detection light sources, wherein each detection light source is configured to output a respective detection light beam, the objective lens is configured to receive the detection light beams and focus each detection light beam onto the cantilever of a respective one of the probes; the probes are configured to reflect the detection light beams to generate sensing light beams; and the probe microscope further comprises a sensing system configured to receive the sensing light beams and determine positions of the probes from the sensing light beams.

Optionally the detection system further comprises a detection collector lens configured to collect the detection light beams from the detection light sources, and the objective lens is configured to receive the detection light beams from the collector lens. Alternatively the detection system may have no detection collector lens, or instead of having a separate detection collector lens, the detection system may share the actuation collector lens of the actuation system so the actuator collection lens is configured to collect both the detection light beams and the actuation light beams.

Optionally the sensing system comprises an interferometer.

Optionally each detection light beam is directed onto an associated one of the probes with the objective lens to generate a reflected sensing beam which is combined at the interferometer with an associated reference beam to generate an interferogram.

Where the following optional features refer to light sources, light beams, source lenses or collector lenses, this may apply to the actuation system, to the detection system, or to both.

Optionally a numerical aperture of each light source is 0.05 or less, or 0.02 or less. In one embodiment, the numerical aperture of each light source is very approximately 0.01.

Optionally each light source comprises means configured to reduce a numerical aperture of the light source. By way of example this may comprise a refractive element such as a source lens or a graded-index optical fibre; a curved end face of an optical fibre; or any other suitable means. Optionally the means configured to reduce a numerical aperture of the light source reduces the numerical aperture of the light source to 0.05 or less, or to 0.02 or less.

Optionally each light source comprises a source lens.

Each light beam may be divergent or convergent as it exits the source lens.

Optionally the light beams are parallel with each other as they exit the light sources and/or the light beams are parallel with each other as they enter the collector lens.

Optionally a pitch between the source lenses is less than 1mm, or less than 0.5mm, or less than 0.25mm.

Optionally the source lenses have co-planar focal planes - i.e. the source lenses have focal planes which lie in substantially the same plane.

Optionally the lighting system further comprises a structure which supports and positions the light sources.

Optionally the structure comprises a plurality of V-grooves, each carrying a respective one of the optical fibres.

Optionally each light source comprises an optical fibre.

Optionally the lighting system comprises a light generator (for example, a laser) configured to generate and emit light; an input fibre configured to receive the light; and a fibre splitter configured to receive the light from the input fibre and distribute it amongst the optical fibres.

Optionally each light source comprises a light generator (for example, a laser) configured to generate and emit light. Optionally each light source further comprises an optical fibre which is configured to receive light from its respective light generator.

Optionally each light generator comprises a vertical-cavity surface-emitting laser (VCSEL).

Optionally the lighting system further comprises a semiconductor substrate which supports and positions the VCSELs.

Optionally each light beam is parallel-sided as it enters the objective lens.

Optionally the light beams are not parallel with each other as they enter the objective lens.

Optionally a pitch between the probes tips is less than 100 µm, or less than 20 µm, or less than 15 µm.

Optionally a pitch between the light sources is less than 1mm, or less than 0.5mm, or less than 0.25mm.

Optionally each source lens is bonded or otherwise physically coupled to a respective optical fibre.

Typically the plurality of probes comprises five or more probes, or ten or more probes. Optionally the plurality of probes comprises one hundred or more probes.

The probes may be arranged in a single straight line, or in a two-dimensional array.

The light sources are spatially separated from each other in an array. The array may consist of a single straight line, or the array may be a two-dimensional array.

Optionally the probe microscope is a scanning probe microscope which is configured to generate a scanning motion between the probes and a sample, by moving the probes and/or by moving the sample.

Optionally the scanning probe microscope is configured to generate the scanning motion between the probes and the sample by moving the probes, and the probe microscope further comprises a tracking mirror. The tracking mirror may be configured to receive the light beams from the collector lens and reflect them towards the objective lens, and the tracking mirror may be further configured to move during the scanning motion to maintain the light beams on the cantilevers.

The probe microscope may be used in a number of applications, including (but not limited to): scanning probe microscopy, for example for extreme ultraviolet (EUV) mask inspection and review; biosensing to detect multiple biomarkers; nanolithography, such as dip pen nanolithography in which scanning probes deposit chemical compounds on a substrate; or data storage in which each probe has a heater allowing its temperature to be independently raised to melt a polymer substrate followed by an imprinting action by the probe producing a dent representing a binary digit. Thus the term "probe microscope" is used herein to refer to an instrument which is not necessarily used for imaging or inspection, but may instead be used for other purposes such as manipulation or modification of a sample.

Claim 14 of the invention provides a probe microscope comprising: a probe array comprising: an array of probes, each probe comprising a cantilever and a probe tip; a lighting system comprising: one or more light generators configured to generate and emit light, and an optical fibre array comprising an array of optical fibres, wherein the optical fibre array is configured to receive the light emitted from the one or more light generators, and each optical fibre is configured to output a respective light beam; a collector lens configured to collect the light beams from the optical fibres; and an objective lens configured to receive the light beams from the collector lens and focus each light beam onto the cantilever of a respective one of the probes.

Claim 15 of the invention provides a method of operating a probe microscope according to any preceding aspect, the method comprising actuating the probes by modulating the power of the light beams, wherein the powers of some or all of the light beams are modulated differently.

### BRIEF DESCRIPTION OF THE DRAWINGS

Embodiments of the invention will now be described with reference to the accompanying drawings, in which:
Figure 1 is a schematic drawing of a scanning probe microscope;
Figure 2 shows an interferometer of the microscope of Figure 1;
Figure 3 illustrates a first embodiment of the actuation lighting system of the microscope of Figure 1;
Figure 4A illustrates a lens system;
Figure 4B illustrates the reduction of numerical aperture provided by the source lens;
Figure 5 is an end view of the optical fibres and V-groove support;
Figure 6 shows the cantilevers and illumination spots;
Figure 7 illustrates a further embodiment of the actuation lighting system of the microscope of Figure 1;
Figure 8 illustrates a further embodiment of the actuation lighting system of the microscope of Figure 1;
Figure 9 shows the cantilevers with two actuation beams per cantilever;
Figure 10 shows a two-dimensional array of actuation light sources;
Figure 11 is a schematic drawing of a scanning probe microscope according to a further embodiment of the invention;
Figure 12 shows an interferometer of the microscope of Figure 11;
Figure 13 illustrates a first embodiment of the detection lighting system of the microscope of Figure 11;
Figure 14 illustrates a further embodiment of the detection lighting system of the microscope of Figure 11; and
Figure 15 illustrates a further embodiment of the detection lighting system of the microscope of Figure 11;
Figure 16 illustrates a probe microscope according to a further embodiment of the invention.

### DETAILED DESCRIPTION OF EMBODIMENT(S)

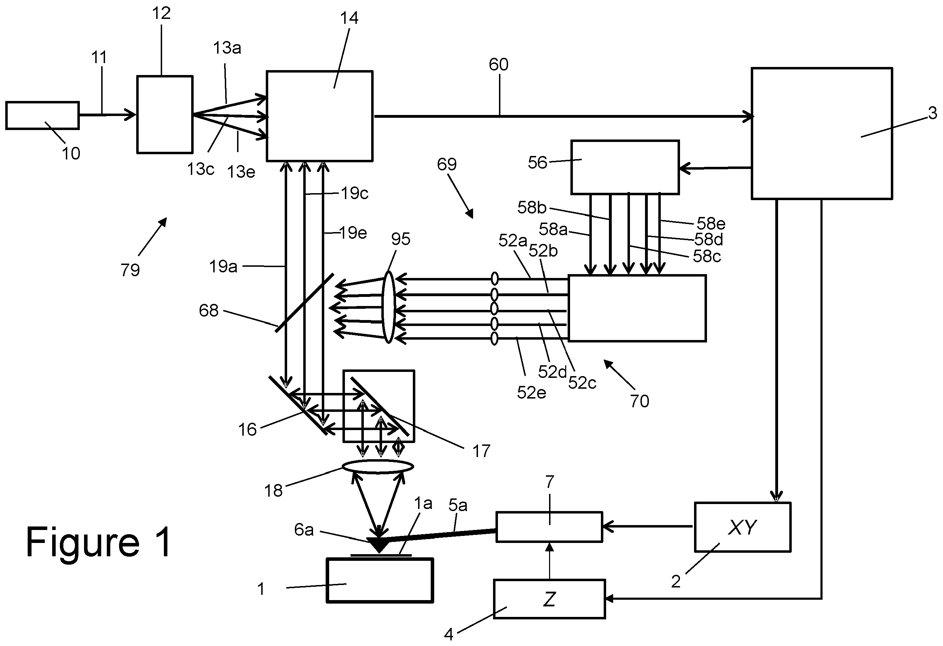

With reference to Figure 1, a scanning probe microscope that incorporates an interferometer based detection system 79 and a photothermal actuation system 69 in accordance with an embodiment of the present invention is shown. Many features of the scanning probe microscope are described in detail in US 2015/0219686 A1.

The microscope comprises a moveable stage 1 adapted to receive a sample 1a whose surface is to be investigated by an array of thermally actuated bimorph probes, only one of which is shown in Figure 1. The scanning capability is provided by two conventional drive systems: an x,y scanner 2 operable by an SPM controller 3 to provide relative motion of the probe array in the plane (*x, y*) of the sample 1a; and a *z* positioning system comprising piezoelectric drivers 4 operable to move the probe and sample towards and away from each other (z direction) over ranges larger than that achievable by the photothermal actuation of the probe array.

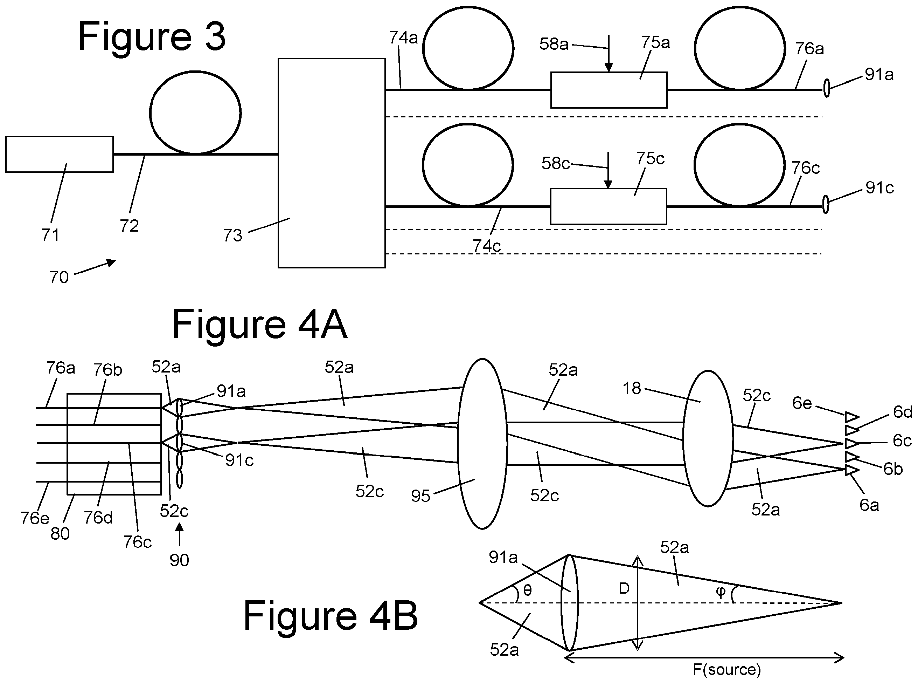

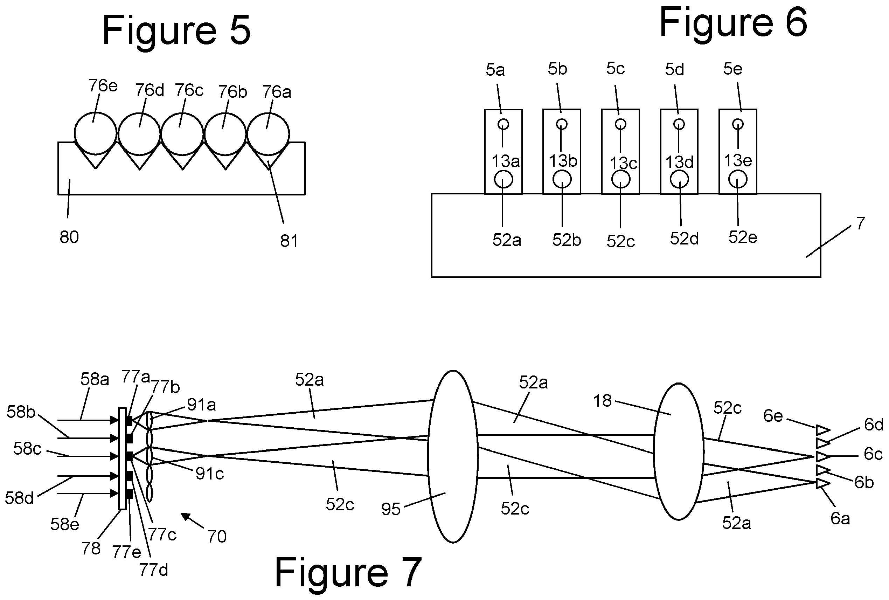

The probe array comprises a linear array of cantilever beams 5a-e, each carrying a probe tip 6a-e which tapers to a point, and which is located towards a distal end of the cantilever beam. The other (base or proximal) end of each cantilever beam 5a-e is supported by a mount 7. In this embodiment, the z-positioning system 4 is connected to the probe mount 7. Alternatively, it may be connected to the sample stage 1. Figure 1 schematically shows only one probe 5a, 6a of the probe array, and this probe is shown rotated by 90° relative to its normal orientation, in order to show the cantilever 5a and the probe tip 6a. The probe tips 6a-e of all five probes of the array are shown in Figure 4A, and the cantilevers 5a-e of all five probes of the array are shown in Figure 6.

Each probe tip 6a-e comprises a three dimensional, often conical or pyramidal structure that is located at the free end of a respective cantilever beam 5a-e. Each probe tip 6a-e tapers to a point that is its closest point of interaction with a surface under interrogation. The cantilever is the beam itself, excluding the tip, that supports the tip at one end and at the other is held by the microscope apparatus. The cantilever and probe tip together are referred to as the probe.

Each probe is generally fabricated from silicon or silicon nitride. Typically, the cantilever 5a-e is around 50 - 200 µm long, 20 - 50 µm wide and around 0.2 - 2 µm thick, but this size can of course be varied according to application. The shape may also be varied: typically it is rectangular or triangular with, in the latter case, the tip in the vicinity of its apex. Each probe tip 6a-e is typically 5 µm at its base, 3 - 10 µm high and with an end radius of curvature of 2 - 20 nm. In use, the fine point at the end of the probe tip 6a-e is oriented towards the sample 1a. Smaller dimension probes may be fabricated for use at faster imaging speeds. These probes have cantilevers around 5 - 20 µm long and 3 - 10 µm wide, with a correspondingly smaller tip. The tip may be formed as part of the cantilever beam fabrication process or added as a post processing step, for example, using electron beam deposition (EBD) to create a diamond like carbon (DLC) spike. Additionally, the cantilever beam is coated in a metal, typically, gold or aluminum, to increase the reflectivity of the cantilever beam when using an optical detection method.

The system is in principle capable of any conventional SPM imaging mode, and also more advanced modes developed for industrial inspection, such as, the inspection of semiconductor wafers or photo-masks. The system allows parallel operation of the array of cantilever probes.

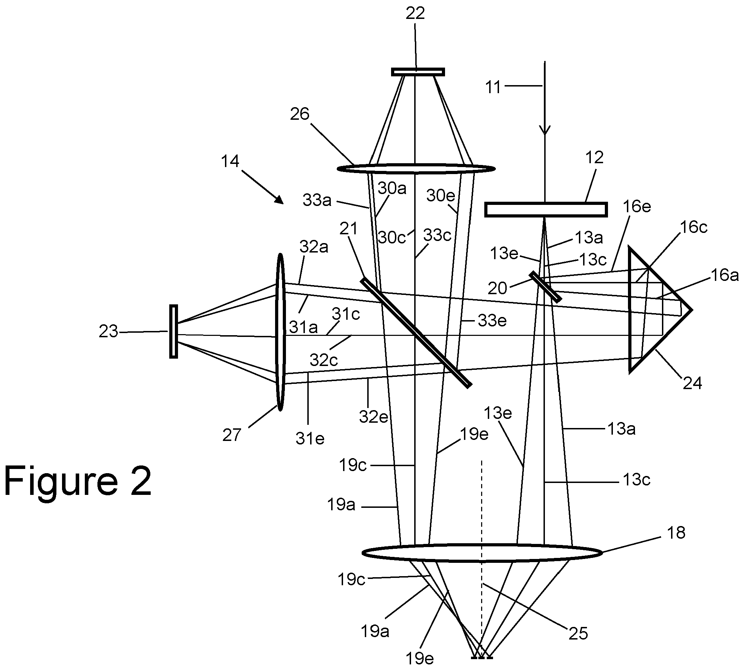

The detection system 79 comprises a detection laser 10 which generates a detection input beam 11 which is incident on a Spatial Light Modulator (SLM) 12 where the beam is split into the required number of detection beamlets, each beamlet constituting a detection light beam. Typically the beam 11 is split into one beamlet for every cantilever in the array. So in this case, five detection light beams (one per probe) are generated. For ease of illustration, only three of the five detection light beams are shown in Figures 1 and 2, and labelled 13a, 13c, 13e. Figure 6 shows all five of the detection light beams 13a-e as spots on the cantilevers 5a-e.

Alternatively the beam 11 may be split into two or more beamlets per cantilever to measure heights or relative heights at different locations (for example one at the probe tip and another at the base to measure bending of the cantilever). Further details of the SLM 12 are given in US 2015/0219686 A1.

Optionally the beam 11 has a wavelength in the visible spectrum - for instance it may be green light with a wavelength of 532nm.

The detection light beams 13a-e then enter a sensing system in the form of interferometer 14 shown in Figure 2, where they are split by a beam splitter 20 to provide reference beamlets 16a-e. Further details of the interferometer 14 are given in US 2015/0219686 A1.

As shown in Figure 1, the detection light beams 13a-e leave the interferometer 14 and are reflected by a fixed mirror 16 onto a tracking mirror 17 that steers the detection light beams 13a-e during XY scanning so that they remain optimally positioned on the cantilevers. The tracking mirror 17 comprises a scanning mirror which reflects the detection light beams 13a-e at an angle which varies synchronously with the *x,y* scanner 2. Alternatively the tracking mirror 17 may be omitted and this steering function undertaken by the SLM 12, depending on the speed requirements. The detection light beams 13a-e, having been steered by the tracking mirror 17 or SLM 12, are then focused by an objective lens 18 onto the ends of the cantilevers where they are reflected back towards the objective lens 18. Thus the probes are configured to reflect the detection light beams 13a-e to generate sensing light beams 19a-e.

As shown in Figure 2, the objective lens 18 collects and collimates the reflected sensing light beams 19a-e and projects them back into the interferometer 14, where they are split into two sensing beam components 30a-e and 31a-e by a phase shifting beam splitter 21 and incident on multisegment photodiodes 22,23.

The reference beamlets 16a-e are each split by the phase shifting beamsplitter 21 into two reference beam components 32a-e and 33a-e and incident on the multisegment photodiodes 22,23 where they are interfered with their associated sensing beam components 30a-e and 31a-e. The coating of the phase shifting beam splitter 21 generates a phase quadrature relationship between the pair of interferogram beams produced by the overlapping reference beam components 32a-e and 33a-e and associated sensing beam components 30a-e and 31a-e.

Further details of the overlap of the beam components at the multisegment photodiodes 22,23 are given in US 2015/0219686 A1.

Although the objective lens 18 is illustrated as a single lens element, it will be understood that it may comprise an assembly of multiple lens elements.

Detection signals 60 are sent from the interferometer 14 to the SPM controller 3, which is adapted for parallel operation, each data channel representing the position of a point on a cantilever within the array with respect to a reference point.

The reference beamlets 16a-e are directed towards a suitably positioned retro-reflector 24, and thereafter to the beam splitter 21, where the reference beamlets are split and recombined with the two sensing light beams to create first and second interferograms with a relative phase shift of 90 degrees. The interferograms are detected respectively by the first and second multisegment photodiodes 22,23. Interferometric methods of extracting the path difference between two coherent beams in such a homodyne interferometer are well known in the art and so will not be described here.

The two interferograms should ideally produce signals from the multisegment photodiodes 22, 23 which are complementary sine and cosine signals with a phase difference of 90 degrees. The signals should have equal amplitudes with no DC offset and only depend on the displacement of the cantilever and wavelength of the laser. Due to practical limitations, such as imperfect optical components and alignment, the signals are typically not perfectly harmonic, with equal amplitude, in phase quadrature and without a DC offset. Thus known methods can be used to monitor the photodiode output signals while changing the optical path length difference in order to determine and to apply corrections for these errors.

The phase quadrature signals from the photodiodes are suitable for use with conventional interferometer reversible fringe counting and fringe subdividing techniques which, for example, may be implemented using dedicated hardware, programmable hardware such as an FPGA or as a programmed computer. Methods for subdividing or interpolating based on the arc tangent of the quadrature signals are well known and can provide sub nanometer resolution.

Note that optionally the retro-reflector 24 may be replaced by a lens and a planar mirror. This might be advantageous in a non-infinity-corrected system where the probes are not at the focal plane of the objective lens 18.

The detection light beams are steered by the SLM 12 so that the detection light beams 13a-e propagate at different angles relative to the optical axis of the objective lens 18, such that when they reach the objective lens 18 it focuses each detection light beam at the required place on the back of each cantilever in the array, in the focal plane of the lens for an infinity-corrected system. The SLM 12 achieves this diffractive beam steering with an optical phased array analogous to a radar system.

The microscope of Figure 1 also has a photothermal actuation system 69 for bending the probes which will now be described.

The actuation system 69 comprises an actuation lighting system 70 which generates power-modulated actuation light beams 52a-e. A first embodiment of the actuation lighting system 70 is shown in Figure 3.

Figure 3 illustrates the modulators and optical fibres of only two of the probes, to aid the clarity of the drawing. The other probes have equivalent modulators and optical fibres not shown in Figure 3.

With reference to Figure 3, the actuation lighting system 70 comprises a laser 71 (or other light generator) configured to generate and emit light. An input fibre 72 is configured to receive the light from the laser 71, and a fibre splitter 73 is configured to receive the light from the input fibre 72 and distribute it amongst pigtailed optical fibres 74a, 74c, one optical fibre per probe.

The actuation lighting system 70 further comprises modulators 75a, 75c which are each configured to receive light from a respective pigtailed optical fibre 74a, 74c, modulate a power of the light to generate power-modulated light, and direct the power-modulated light into a respective output optical fibre 76a-e.

The actuation light beams 52a-e output by the optical fibres 76a-e diverge with a relatively high half-angle θ as shown in Figure 4B. In other words, the optical fibres 76a-e have a relatively high numerical aperture.

In order to reduce the angle of divergence of the actuation light beams 52a-e, the actuation lighting system 70 further comprises an actuation source lens array 90 of actuation source lenses, two of which are individually labelled 91a and 91c in Figures 3 and 4A. Each actuation source lens 91a, 91c is positioned to receive and focus a respective one of the actuation light beams 52a, 52c from a respective optical fibre 76a, 76c.

The actuation source lenses may be graded-index (GRIN) lenses, or any other suitable type of lens.

Thus the actuation lighting system 70 of Figure 3 comprises a plurality of actuation light sources, each actuation light source comprising a respective optical fibre 76a-e and a respective actuation source lens of the actuation source lens array 90. Each actuation light source is configured to output a respective actuation light beam. So for example the actuation light source 76a, 91a outputs the actuation light beam 52a and the actuation light source 76c, 91c outputs the actuation light beam 52c.

As shown in Figure 4B, the numerical aperture of each actuation light source is reduced by its respective actuation source lens 91a, 91c so that the half-angle φ from the source lens is less than the half-angle θ from the optical fibre.

By way of example, the optical fibres 76a-e may be standard telecom single mode fibres with a numerical aperture of about 0.1. The source lens array 90 may reduce the numerical aperture of the actuation light sources to very approximately 0.01, but this is quite dependent on all the other optics (for example the pitch between the fibres, the types of lenses used, etc.).

The modulators 75a, 75c may be acousto-optic modulators (AOMs) or electro-optic modulators (EOMs) for example.

Each pigtailed optical fibre 74a, 74c has an optical connector connected to an input of a respective modulator 75a, 75c, and each output optical fibre 76a, 76c is pigtailed with an optical connector connected to an output of a respective modulator 75a, 75c.

In the example of Figure 4A, the probe tips 6a-6e of only five probes are shown, but in general there may be any number of probes, for instance two probes, more than five probes, or ten or more probes.

Referring to Figure 1, the modulators are individually and independently controlled by a signal generator 56 that, in turn, is linked to the SPM controller 3. The signal generator 56 is configured to generate power-modulation signals 58a-e. As shown in Figure 3, the modulators 75a, 75c receive the power-modulation signals as inputs, and are configured to modulate the power of the actuation light beams 52a-e on the basis of the power-modulation signals 58a-e.

The power-modulated actuation light beams 52a-e from the actuation lighting system 70 of Figure 3 are projected onto the probes by a lens system 95, 18 shown in Figure 4A.

A structure 80 shown in Figure 5 supports and positions the optical fibres 76a-e. The structure 80 comprises a substrate with V-grooves 81, each carrying a respective one of the optical fibres 76a-e. A lid (not shown) may be fitted on top of the optical fibres 76a-e. The optical fibres 76a-e have polished end faces which are co-planar - i.e. they lie in substantially the same plane.

The axes of the V-grooves 81 are parallel with each other, so the optical axes of the optical fibres 76a-e are also parallel with each other. Consequently the actuation light beams 52a-e are parallel with each other as they exit the actuation lighting system 70.

The optical fibres provide an advantage over a free-space optical system because they can be packed closely together in an array by the V-groove structure 80 with precisely controlled spacing and alignment.

Optionally each actuation source lens 91a, 91c etc. is bonded to a respective one of the optical fibres 76a-e.

Optionally each actuation source lens 91a, 91c etc. is seated in the same V-groove as its respective optical fibre 76a-e.

Each actuation source lens 91a, 91c etc. is positioned to receive a respective one of the actuation light beams from an optical fibre. So for example, as indicated in Figure 4A, the actuation source lens 91a is positioned to receive the actuation light beam 52a and the actuation source lens 91c is positioned to receive the actuation light beam 52c.

The focal planes of the actuation source lenses 91a, 91c are co-planar - i.e. they lie in substantially the same plane. A focal plane of the actuation source lens array 90 coincides with the plane of the actuation light sources (i.e. the plane of the end faces of the optical fibres 76a-e).

An actuation collector lens 95, also known as a tube lens, is configured to collect all of the actuation light beams 52a-e from the actuation light sources and direct them onto the objective lens 18 via the mirrors 68, 16, 17 shown in Figure 1.

The actuation source lenses 91a, 91c etc. provide a means for reducing the numerical aperture of the actuation light sources, so all of the actuation light beams 52a-e can be collected by the actuation collector lens 95.

The objective lens 18 is configured to receive all of the actuation light beams 52a-e from the actuation collector lens 95, and focus each actuation light beam 52a-e onto the cantilever 5a-e of a respective one of the probes. Figure 6 shows the actuation light beams 52a-e as spots on the cantilevers 5a-e. Each actuation light beam 52a-e is parallel-sided as it enters the objective lens 18.

The actuation light beams 52a-e are reflected by a dichroic mirror 68 and the tracking mirror 17 (shared with the detection system 79) which maintains them in position on the cantilevers as they are scanned in XY.

In this example the scanning probe microscope is configured to generate a scanning motion between the probes and the sample by moving the probes in XY. The tracking mirror 17 is configured to receive the actuation light beams 52a-e from the actuation collector lens 95, and reflect them towards the objective lens 18. The tracking mirror 17 is further configured to move (by rotating, optionally with an element of translation) during the scanning motion to maintain the actuation light beams 52a-e on the cantilevers.

Figure 7 shows an alternative embodiment of the actuation lighting system 70. The lens system 95, 18 in Figure 7 is identical to the lens system in Figure 4A, so will not be described again.

The actuation lighting system 70 of Figure 7 comprises an array of vertical-cavity surface-emitting lasers (VCSELs) 77a-e. A semiconductor substrate 78 supports and positions the VCSELs 77a-e with the required pitch. Each VCSEL 77a-e is configured to generate and output a respective actuation light beam 52a-e which is received by a respective actuation source lens 91a, 91c of the actuation source lens array 90.

The VCSELs 77a-e lie in a focal plane of the actuation source lens array. In the case of Figure 7, no optical fibres or separate power modulators are provided. Rather, the power-modulation function is integrated into the VCSELs 77a-e. That is, the VCSELs 77a-e are configured to modulate the power of the actuation light beams 52a-e to actuate the probes, and the power-modulation signals 58a-e input directly into the VCSELs 77a-e as indicated in Figure 7. Each VCSEL 77a-e is configured to modulate the power of its respective actuation light beam 52a-e independently, on the basis of its respective power-modulation signal 58a-e. The embodiment of Figure 7 provides a more simple lighting system than the embodiment of Figure 4A, without optical fibres.

Thus the actuation lighting system 70 of Figure 7 comprises a plurality of actuation light sources, each actuation light source comprising a respective VCSEL 77a-e and a respective actuation source lens 91, 91c etc. Each actuation light source is configured to output a respective actuation light beam. So for example the actuation light source 77a, 91a outputs the actuation light beam 52a and the actuation light source 77c, 91c outputs the actuation light beam 52c.

As in the embodiment of Figure 4A, the actuation source lenses 91a, 91c etc. provide a means for reducing the numerical aperture of the actuation light sources, so all of the actuation light beams 52a-e can be collected by the actuation collector lens 95. Alternatively, if the VCSELs 77a-e have a sufficiently low numerical aperture then the actuation source lenses 91a, 91c etc. may be omitted.

The system may require a power-modulation bandwidth as high as 40MHz, and the power-modulation bandwidth of the VCSELs 77a-e should be sufficient to meet this requirement.

The pitch between the VCSELs 77a-e should ideally be as small as possible, and a pitch of the order of 250µm should be possible.

The VCSELs 77a-e provide an advantage over other types of laser because they can be packed closely together in an array, with precisely controlled spacing and alignment.

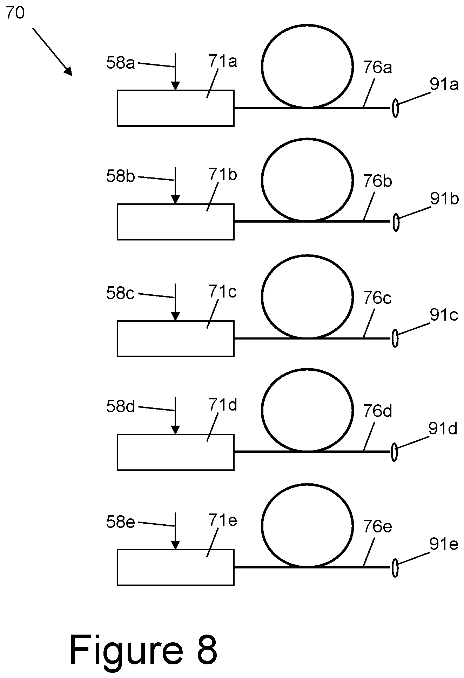

Figure 8 shows a further alternative embodiment of the actuation lighting system 70. Some elements of the actuation lighting system 70 of Figure 8 are similar to the actuation lighting system 70 of Figure 4A, so only the differences will be described.

The fiber splitter 73 of Figure 4A is omitted, and the actuation lighting system 70 comprises five lasers 71a-e rather than only one laser 71. Each laser 71a-e is configured to generate and emit light which it feeds into a respective one of the optical fibres 76a-e. Thus each optical fibre 76a-e is configured to receive light from its respective laser.

The modulators 75a, 75c are also omitted. Rather, the power-modulation function is integrated into the lasers 71a-e. That is, the lasers 71a-e are configured to modulate the power of the actuation light beams 52a-e to actuate the probes, and the power-modulation signals 58a-e address the lasers 71a-e as indicated in Figure 8. All of the lasers 71a-e are configured to modulate the power of their actuation light beams 52a-e independently on the basis of their respective power-modulation signal 58a-e.

So in the case of Figure 8 the actuation lighting system 70 has five independent actuation light sources: a first actuation light source comprising laser 71a, optical fibre 76a and actuation source lens 91a; a second actuation light source comprising laser 71b, optical fibre 76b and actuation source lens 91b; and so on. The optical fibres provide an advantage over a free-space optical system because they can be packed closely together in an array by the V-groove structure 80 with precisely controlled spacing and alignment. The actuation source lenses 91a-e provide a means for reducing the numerical aperture of the actuation light sources.

As shown in Figure 6, the center-to-center pitch between the probe tips may be uniform. By way of example, the pitch may be 12.7µm. The center-to-center pitch between the end faces of the optical fibres 76a-e is set by the center-to-center pitch between the V-grooves 81. By way of example, the pitch between the end faces of the optical fibres 76a-e may be 127µm (i.e. ten times greater than the pitch between the probe tips).

The actuation lighting system 70 comprises a plurality of actuation light sources (either with an array of optical fibres 76a-e or an array of VCSELs 77a-e). The actuation source lens array 90 is configured to create a first-stage image of the optical fibres 76a-e or the VCSELs 77a-e, and the actuation collector lens 95 and the objective lens 18 are configured to project a second-stage image of the optical fibres 76a-e or the VCSELs 77a-e onto the probe array.

The first-stage image is a magnified image and the second-stage image is a demagnified image. The overall de-magnification ratio is ten, in order to accommodate the ten-times reduction in pitch.

By way of example, the focal length of the collection lens 95 may be 100mm, and the focal length of the objective lens 18 may be 10mm.

The overall de-magnification ratio can be changed to accommodate a change in pitch between the probe tips, by changing the focal length of either the collection lens 95 or the objective lens 18. Most conveniently this can be done by replacing the collection lens 95 with a different collection lens having a different focal length.

In the embodiments above, the actuation source lenses 91a, 91c etc. all have the same focal length. However this is not essential, and in other embodiments the focal lengths may vary between some of the actuation source lenses.

In the embodiments above, an actuation source lens array 90 is provided to counteract the high numerical aperture of the optical fibres 76a-e or the VCSELs 77a-e. However, the actuation source lens array 90 is not essential, and other means may be used instead to control the numerical aperture. In one alternative embodiment, instead of providing an actuation source lens array 90, the end faces of the optical fibres 76a-e may be curved rather than planar, thereby providing a lens-like effect which focuses the actuation light beams 52a-e and reduces the numerical aperture. In another alternative embodiment, the optical fibres 76a-e may be graded-index (GRIN) fibres with a refractive index gradient which has a similar focusing effect to control the numerical aperture.

In the embodiments above, the probes are arranged in a single straight line, i.e. a linear array. In other embodiments, the probes may be arranged in a two-dimensional array. In this case, the actuation light sources, and the lenses of the lens array 90, will also be arranged in corresponding two-dimensional arrays.

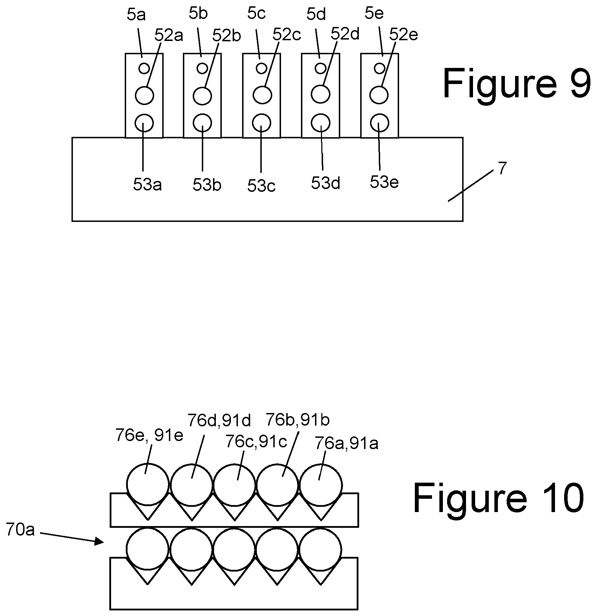

Figure 9 shows an alternative embodiment similar to Figure 6, so only the differences will be described. In the case of Figure 9, each cantilever 5a-e is illuminated by three light beams: a detection beam (not labelled) at the tip; a first set of power-modulated actuation light beams 52a-d generated by the optical fibres 76a-e and their associated actuation source lenses 91a-e; and a second set of power-modulated actuation light beams 53a-d generated by a similar second set of actuation light sources 70a shown in Figure 10. Both sets of power-modulated actuation light beams 52a-d, 53a-d are projected onto the probes by the actuation collector lens 95 and the objective lens 18.

The actuation light sources of Figure 10 are arranged in a two-dimensional array corresponding with the two-dimensional array of spots shown in Figure 9.

In the embodiments above, the actuation lighting system 70 is configured to modulate the power of all of the actuation light beams 52a-e, 53a-e independently. However, this is not essential, and in other embodiments some of the actuation light beams 52a-e, 53a-e may be modulated in a non-independent way. So for example a group of two or more of the actuation light beams 52a-e, 53a-e may be modulated in unison (i.e. with no difference in the modulation between the beams in the group). In general, the powers of at least some of the actuation light beams 52a-e, 53a-e are modulated independently. This enable the powers of some or all of the actuation light beams 52a-e, 53a-e to be modulated differently whilst simultaneously illuminating the probes.

In the embodiment of Figure 4A, the actuation lighting system 70 has a modulator 75a, 75c etc. for each probe. In alternative embodiments, for example where a group of actuation light beams is modulated in unison, then that group may share a single modulator. Thus in general terms, the lighting system may comprise two or more modulators, and each modulator may be configured to modulate a power of one or more of the actuation light beams 52a-e, 53a-e.

The lighting systems 70 described above are capable of controlling the cantilevers in a number of ways, with great flexibility and control. For example, by steering each actuation light beam 52a-e to the base of the cantilevers as shown in Figure 6, the photothermal effect can be used to deflect the cantilever up and down for the purposes of cantilever selection, or alternatively, z-actuation in the case of conventional SPM feedback control. If the cantilevers are required to resonate, which is a common requirement for a number of SPM imaging modes, the actuation light beams 52a-e can be power-modulated to drive the cantilevers at one or more of the resonant frequencies. Furthermore different cantilevers can be designed and fabricated differently to resonate at different frequencies to allow completely independent operation. The above examples of operating modes are not intended to be restrictive in any way but do give some example of the range of capabilities of the parallel probe SPM.

Figure 6 is a view showing the cantilevers 5a-e each illuminated by a respective actuation light beam 52a-e at its proximal end near the mount 7 and by a respective detection light beam 15a-e at its distal end above the probe tip 6a-e (which is on the opposite side of the cantilever and hence not shown in Figure 6). With a suitable objective lens 18 it is possible to achieve a spot size for the actuation light beams 52a-e and detection light beams 15a-e of only a few microns, allowing the precise application of infra-red radiation to a specific location on the cantilever as required for efficient detection, and photothermal actuation.

The cantilevers 5a-e are thermal biomorph structures, the materials of which undergo differential expansion when heated. That is, they are composed of two (or more) materials, with differing thermal expansions. Typically, this will be a silicon or silicon nitride base with a gold or aluminium coating. The coating extends the length of the cantilever and covers the reverse side from the tip. The actuation lighting system 70 preferably emits light of one or more wavelengths at which there is a maximum or peak in the absorption spectrum for the particular coating. For example the wavelength may be around the aluminium absorption peak at ~810 nm. Other coating / wavelength combinations can be used, for example gold has a higher absorption below 500 nm light. When this light is incident on the coating side of the cantilevers, the aluminium expands to a greater degree than the silicon nitride, bending the cantilever such that the tip moves downwards, towards the sample. If illumination intensity is increased, the tip therefore moves closer to the sample surface. Conversely, if the intensity is lowered, bending is decreased and the tips are moved away from the sample. Other arrangements of coating and base materials may result in bending in an opposite direction in response to illumination.

In one embodiment, the power-modulated actuation light beams 52a-e and 53a-e have a wavelength in the region of 1350-1550nm. This is a wavelength range commonly used in the telecommunication industry which can provide a diverse source of optical components (optical fibres, optical fibre splitters etc.).

The cantilevers 5a-e are shown in Figure 6 with a constant center-to-center spacing (pitch) between them, but optionally the pitch between adjacent cantilevers may vary across the width of the array.

Referring to Figure 1: the actuation lighting system 70 is controlled by a signal generator 56 that, in turn, is linked to the SPM controller 3. The intensity of the actuation light beams 52a-e determines the degree of bend exhibited by the thermal bimorph probes (regardless of their material specifics) and so governs the tip - sample separation distance during the course of a scan.

The intensity of the actuation light beams 52a-e and/or 53a-e is modulated as the scan progresses in accordance with parameters that will be described in the next section. Essentially, the actuation lighting system 70 can be considered to provide the drive mechanism for both the z position feedback and the probe oscillation. That is, the actuation lighting system 70 is configured to drive oscillation of each cantilever probe and adjust each probe-sample separation distance during the course of a scan.

Specific embodiments of the imaging modes of the microscope of Figure 1 will now be described in more detail.

The parallel probe microscope is especially suitable for examining large, substantially flat, surface areas to detect features on the nanometer scale, at the high speeds required for effective industrial application.

In taking an image of the sample, the SPM may be operated as follows.

When the power-modulated actuation light beams 52a-e are incident on each cantilever, they causes a flexing of the cantilever that varies with the power-modulation. The probe tip is therefore driven towards and away from the sample at a frequency and amplitude that, in free space, is the same as that of its respective power-modulation signal 58a-e. The probe oscillation frequency is normally chosen to be at or near resonance. Alternatively, the probe can be driven off-resonance but still at a high frequency.

In operation, each cantilever probe is simultaneously irradiated by a respective power-modulated actuation light beam as described above, such that it oscillates with a desired free space amplitude. The probe mount 7 is then moved towards the sample using the z-actuator 4, so that all the probes are within a specified range of the surface.

This is relatively straightforward if the surface is substantially flat. After initial z positioning of the probe mount 7, there will be some variation in the height of each probe above the surface. This can be compensated for by mechanically tilting the mount 7 until all probes are at the same height above the surface. Alternatively it can be compensated for by irradiating the probes with the actuation light beams 53a-e and using their power-modulation signals to independently modulate the amplitude of each actuation light beam so that individual probes (or groups of probes) bend towards the surface and stop when they are within range. Alternatively it can be compensated for by a combination of the above.

Furthermore, it may be desirable to only have a subset of the probes at an imaging position at a set height above the surface. For example with an array of ten probes it may be desirable to only have five probes (for example every other probe) at an imaging position at any one time. Then if one of the five probes becomes damaged, the five probes can be retracted from the sample 1a and the other five probes moved into position. Such slow gross probe z positioning can be achieved by the actuation light beams 53a-e which can operate to select or retract individual probes (or groups of probes) from the imaging position independently of the other probes in the array.

The signal generator 56 then generates power-modulation signals 58a-e which cause the probe tips to begin to engage in intermittent contact with the surface. The nature of an oscillating probe in intermittent contact with a surface are complex, and will depend on many factors including probe design, tip geometry and chemistry as well as surface topography and chemistry. However in broad terms the oscillation amplitude of each probe is reduced as the tip moves towards, and begins to interact with, the surface, such that the lowest point of the tip oscillation corresponds to the point at which the tip is in contact with the sample surface. In this way each probe effectively samples the surface at a frequency determined by the actuation laser drive frequency.

In the case of Figure 9, where each probe is illuminated by two power-modulated actuation light beams, then one set of the actuation light beams (for instance the actuation light beams 53a-e) may be used to drive some or all of the probes in unison to an imaging position, and the other set of actuation light beams (for instance the actuation light beams 52a-e) may be used to independently oscillate the probes, for instance using the adaptive-drive imaging mode described in US2014026263A1.

Each probe is continually monitored throughout its oscillation by the detection system 79, which outputs a signal 60 for each probe that corresponds to the instantaneous position of the probe at a given point in time. Considerable amounts of data are generated in this way for a high speed scanning system. The SPM controller 3 therefore incorporates a field programmable gate array (FPGA) which is configured in order to provide the necessary processing capability. As is known in the art, alternative signal processing techniques such as digital signal processing (DSP) or a dedicated analogue or digital electronic method may be used.

The probe cyclic motion typically has a frequency range of 10s to 100s of kHz and sampling frequency for data recording is in the region of 100MHz. Consequently, each cycle of probe movement is sampled in the region of 1000 to 10,000 times, which is more than sufficient to analyse the height detector signal 60 to obtain a surface height detection point for each tip in the array. There are a number of ways that the instantaneous height detection signal can be processed to derive a surface height reading for any given probe. However in the simplest case readings can be based on the lowest recorded point in the probe oscillation cycle, when the probe tip is considered to be substantially in contact (or close to contact) with the surface.

The xy scanner 2 translates the cantilever array across the surface of the sample in order to generate an image of the surface. The controller 3 ensures that the tracking system 17 is matched with the scan pattern driven by the scanner 2 such that light from both the actuation system 69 and the detection system 79 maintain their position on each probe (shown in Figure 6) in the array as it moves. The controller 3 may calculate different drive signals for the scanner 2 and tracking system 17 depending on their particular construction and mechanical behaviour. If the sample is scanned, the tracking system may not be required if the sample is moved such that the probes, detection system 79 and actuation system 69 remain in a fixed registration.

In this way the probe array is scanned over the surface, with the microscope collecting data from each probe within the array to provide a spatial map of the surface, formed of data points with sub-nanometer vertical and horizontal resolution. It will be appreciated that many scan operating patterns can be followed to collect data, depending on the kind of inspection information required. In the case of investigating defects on EUV masks, a large surface area must be inspected due to the low levels of defects. Typically the scan pattern will follow a raster pattern, with ten parallel probes providing a data acquisition rate increase of about ten times compared with the case of a single probe microscope.

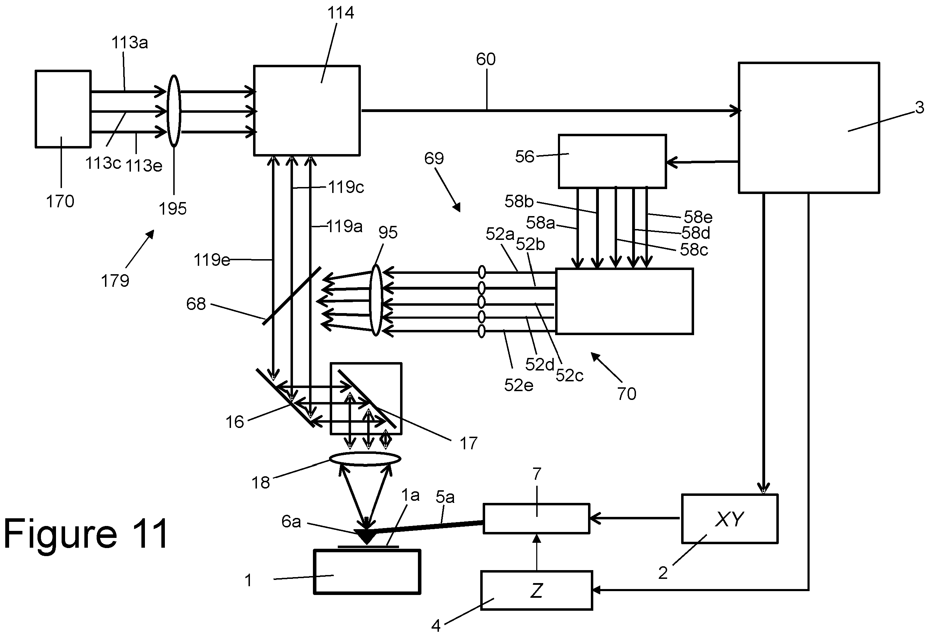

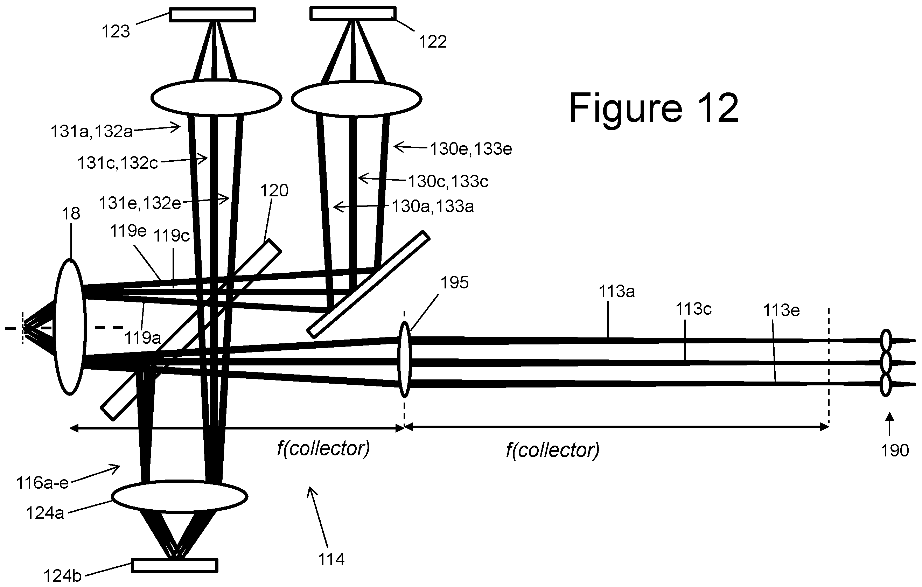

Figure 11 is a schematic drawing of a scanning probe microscope according to a further embodiment of the invention, with a different detection system 179 but an identical actuation system 69. The detection system 179 comprises a detection lighting system 170 and a sensing system in the form of an interferometer 114 shown in Figure 12.

Many elements in Figures 11 and 12 have identical or equivalent elements in Figures 1 and 2. Identical elements are given the same reference number, and will not be described again. Equivalent or similar elements are given the same reference number, incremented by 100.

The detection laser 10 and Spatial Light Modulator (SLM) 12 of the detection system 79 of Figure 1 are replaced by a detection system 179 with a detection lighting system 170 which generates detection light beams 113a-e. As with Figure 1, only three detection light beams 113a, 113c, 113e are shown for ease of illustration. For a five cantilever array there would be five of such detection light beams.

The detection lighting system 170 is similar to the actuation lighting system 70, and comprises a plurality of detection light sources. Each detection light source is configured to output a respective detection light beam 113a-e, and a detection collector lens 195 is configured to collect the detection light beams 113a-e from the detection light sources.

In the microscope of Figure 11, the actuation system 69 has an actuation collector lens 95 and the detection system 179 has a separate detection collector lens 195. In an alternative embodiment the detection system 179 may not have a dedicated separate detection collector lens 195, but instead it may share the actuation collector lens 95 of the actuation system 69.

As shown in Figure 12, the objective lens 18 is configured to receive the detection light beams 113a-e and focus each detection light beam onto the cantilever of a respective one of the probes. The probes are configured to reflect the detection light beams 113a-e to generate sensing light beams 119a-e.

The sensing light beams 119a-e are received by the objective lens 18, and relayed from the objective lens 18 to an interferometer 114, which is configured to receive the sensing light beams 119a-e and determine positions of the probes from the sensing light beams 119a-e.

The detection light beams 113a-e are split by a beam splitter 120 to provide reference beamlets 116a-e.

The detection light beams 113a-e leave the interferometer 114 and are reflected by the fixed mirror 16 onto the tracking mirror 17 that steers the detection light beams 113a-e during XY scanning so that they remain optimally positioned on the cantilevers. The detection light beams 113a-e, having been steered by the tracking mirror 17, are then focused by the objective lens 18 onto the ends of the cantilevers where they are reflected back towards the objective lens 18. Thus the probes are configured to reflect the detection light beams 113a-e to generate sensing light beams 119a-e.

The objective lens 18 collects and collimates the reflected sensing light beams 119a-e and projects them back into the interferometer 114, where they are split into two sensing beam components 130a-e and 131a-e by the phase shifting beam splitter 120 and incident on photodiodes 122, 123.

The reference beamlets 116a-e are each split by the phase shifting beamsplitter 120 into two reference beam components 132a-e and 133a-e and incident on the multisegment photodiodes 122, 123 where they are interfered with their associated sensing beam components 130a-e and 131a-e. The coating of the phase shifting beam splitter generates a phase quadrature relationship between the pair of interferogram beams produced by the overlapping reference beam components 132a-e and 133a-e and associated sensing beam components 130a-e and 131a-e. Note that in Figure 12, unlike in Figure 2, the reference beam components 132a-e and 133a-e and their associated sensing beam components 130a-e and 131a-e are shown as fully overlapping.

The reference beamlets 116a-e are focused by a lens 124a onto a planar mirror 124b and then reflected back via the lens 124a onto the beam splitter 120, where the reference beamlets 116a are split and recombined with the sensing beam components to create first and second interferograms with a relative phase shift of 90 degrees. The interferograms are detected respectively by the first and second multisegment photodiodes 122, 123.

The further operation of the interferometer 114 is the same as for the interferometer 14, and will not be described again.

The detection light beams 113a-c are focused by the detection collector lens 195 so that the detection light beams 113a-e propagate at different angles relative to the optical axis of the objective lens 18. Thus when they reach the objective lens 18 it focuses each detection light beam at the required place on the back of each cantilever in the array, in the focal plane of the objective lens 18 for an infinity-corrected system.

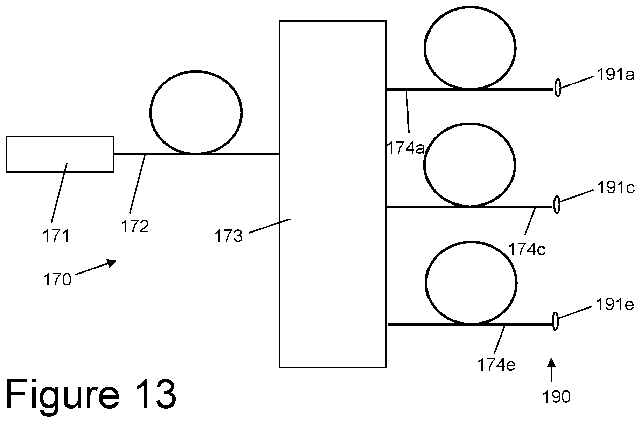

An embodiment of the detection lighting system 170 is shown in detail in Figure 13. The detection lighting system 170 of Figure 13 is similar to the actuation lighting system 70 of Figure 3, the only difference being the omission of the modulators 75a, 75c and optical fibres 76a, 76c.

The detection lighting system 170 comprises a laser 171 (or other light generator) configured to generate and emit light. An input fibre 172 is configured to receive the light from the laser 171, and a fibre splitter 173 is configured to receive the light from the input fibre 172 and distribute it amongst optical fibres 174a, 174c etc. one optical fibre per probe.

In order to reduce the angle of divergence of the detection light beams 113a-113c, the detection lighting system 170 further comprises a detection source lens array 190 of detection source lenses, which are individually labelled 191a, 191c, 191e in Figure 13. Each detection source lens is positioned to receive and focus a respective one of the detection light beams from a respective optical fibre 174a, 174c, 174e etc.

The detection source lenses 191a, 191c, 191e may be graded-index (GRIN) lenses, or any other suitable type of lens.

The detection collector lens 195 has focal lengths labelled f(collector).

The objective lens 18 lies in the front focal plane of the detection collector lens 195. The rear focal plane of the detection collector lens 195 is coincident with the front focal plane of the detection source lens array 190.

The detection lighting system 170 of Figure 13 comprises a plurality of detection light sources, each detection light source comprising a respective optical fibre and a respective detection source lens. Each detection light source is configured to output a respective detection light beam. So for example the detection light source 174a, 191a outputs the detection light beam 113a and the detection light source 174c, 191c outputs the detection light beam 113c.

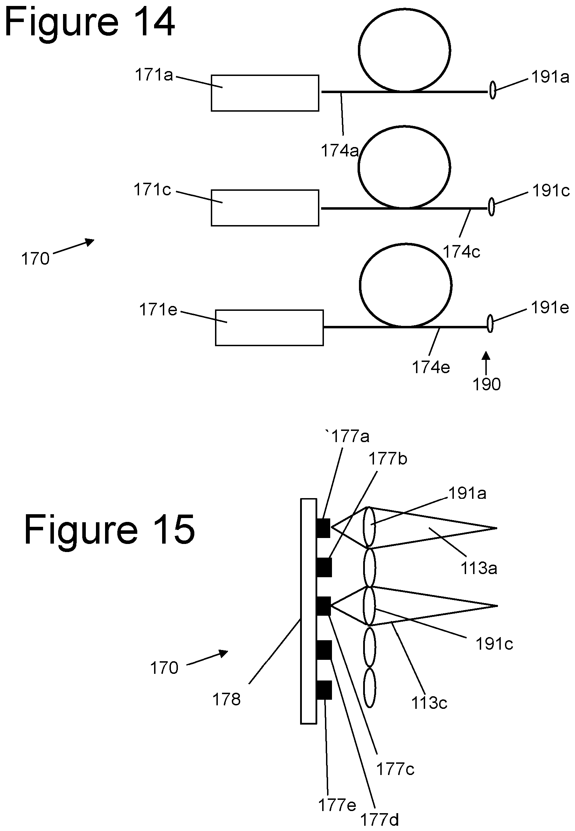

An alternative embodiment of the detection lighting system 170 is shown in Figure 14. The detection lighting system 170 of Figure 14 is similar to the actuation lighting system 70 of Figure 8, the only difference being the fact that the beams are not modulated.

The fiber splitter 173 of Figure 13 is omitted, and the detection lighting system 170 comprises multiple lasers 171a-e (one per probe) rather than only one laser 171. Each laser 171a-e is configured to generate and emit light which it feeds into a respective one of the optical fibres 174a-e. Thus each optical fibre 174a-e is configured to receive light from its respective laser.

So in the case of Figure 14 the detection lighting system 70 has multiple independent detection light sources: a first detection light source comprising laser 171a, optical fibre 174a and detection source lens 191a; a second detection light source comprising laser 171c, optical fibre 174c and source lens 191c; and so on. The optical fibres provide an advantage over a free-space optical system because they can be packed closely together in an array by a V-groove structure with precisely controlled spacing and alignment. The detection source lenses 191a-e provide a means for reducing the numerical aperture of the detection light sources, preferably to a numerical aperture of very approximately 0.01.

An alternative embodiment of the detection lighting system 70 is shown in Figure 15. The detection lighting system 170 of Figure 15 is similar to the actuation lighting system 70 of Figure 9, the only difference being the fact that the beams are not modulated.

The detection lighting system 170 of Figure 15 comprises an array of vertical-cavity surface-emitting lasers (VCSELs) 177a-e. A semiconductor substrate 178 supports and positions the VCSELs 177a-e with the required pitch. Each VCSEL 177a-e is configured to generate and output a respective detection light beam which is received by a respective detection source lens 191a, 191c of the detection source lens array 190.

The VCSELs 177a-e lie in a focal plane of the detection source lens array. In the case of Figure 15, no optical fibres are provided. The embodiment of Figure 15 provides a more simple lighting system than the embodiment of Figures 13 and 14, without optical fibres.

Thus the detection lighting system 70 of Figure 15 comprises a plurality of detection light sources, each detection light source comprising a respective VCSEL and a respective detection source lens. Each detection light source is configured to output a respective detection light beam. So for example the detection light source 177a, 191a outputs the detection light beam 113a and the detection light source 177c, 191c outputs the detection light beam 113c.

As in the previous embodiments, the detection source lenses 191a, 191c etc. provide a means for reducing the numerical aperture of the detection light sources, so all of the detection light beams 113a-e can be collected by the detection collector lens 195. Alternatively, if the VCSELs 177a-e have a sufficiently low numerical aperture then the detection source lenses 191a, 191c etc. may be omitted.

The pitch between the VCSELs 177a-e should ideally be as small as possible, and a pitch of the order of 250µm should be possible.

The VCSELs 177a-e provide an advantage over other types of laser because they can be packed closely together in an array, with precisely controlled spacing and alignment.

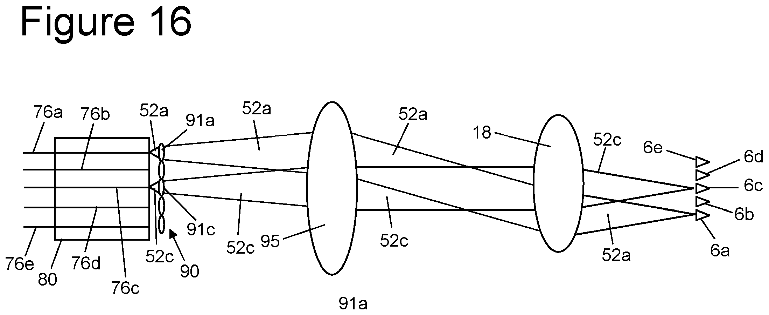

Figure 16 illustrates a probe microscope according to an alternative embodiment of the invention. The elements shown in Figure 16 all have equivalents in Figure 4A, and the same reference numbers are used. Only the differences compared with the probe microscope of Figure 4A will be described.

In the lens systems of Figures 4A, 7, 12 and 15, the light beams 52a-d, 113a-e are divergent as they enter the source lens array 90, 190, and convergent as they exit the source lens array 90, 190. A potential problem with this arrangement is that light from one of the light beams 52a-d, 113a-e may leak slightly into an adjacent source lens of the source lens array 90, 190.

A solution to this problem is to move the source lens array 90 closer to the end faces of the optical fibres 76a-d as shown in Figure 16, so the light beams 52a, 52c etc. are divergent as they exit the source lens array 90. Bringing the source lens array 90 closer to the end faces of the optical fibres also makes the light beams 52a narrower at the point that they enter the source lens array 90, thus reducing the risk of leakage of light between adjacent source lenses.

A similar solution to Figure 16 may also be applied to the embodiments of Figures 7, 12 and 15.

In the lens systems of Figure 4A, 7, 12, 15 and 16 the principal axes of the light beams 52a-d, 113a-e are parallel with each other as they exit the light sources (i.e. as they exit the optical fibres 76a-d or the VCSELs 77a-e, 177a-e) and as they enter the collector lens 95, 195. The principal axes of the light beams 52a-d, 113a-e are also parallel with the optical axis of the collector lens 95, 195 as they enter the collector lens 95, 195. This parallel-beam (or "telecentric") arrangement is beneficial because it is easy to control - for instance it is easy to manufacture the V-grooves 81 with parallel axes.

The collector lens 95, 195 refracts the parallel light beams 52a-d, 113a-e, so the principal axes of the light beams 52a-d, 113a-e are not parallel with each other as they enter the objective lens 18. This ensures that rather than all converging together at the same point, each light beam converges on a respective different probe.

Although the invention has been described above with reference to one or more preferred embodiments, it will be appreciated that various changes or modifications may be made without departing from the scope of the invention as defined in the appended claims.

## Claims

1. A probe microscope comprising: a probe array comprising an array of probes, each probe comprising a cantilever (5a-e) and a probe tip (6a-e); a lighting system (70) comprising a plurality of light sources (71a-e), wherein each light source is configured to output a respective light beam (15a-e, 52a-e); a collector lens (95) configured to collect the light beams from the light sources; and an objective lens (18) configured to receive the light beams from the collector lens and focus each light beam onto the cantilever of a respective one of the probes.

2. A probe microscope according to claim 1, wherein the light beams are actuation light beams (52a-e), the light sources (71a-e) are actuation light sources, the lighting system (70) is configured to modulate a power of the actuation light beams to actuate the probes, and the lighting system is configured to modulate the power of some or all of the actuation light beams independently.

3. A probe microscope according to claim 2, wherein the lighting system is configured so that the modulation of the power of the actuation light beams causes the cantilevers to move.

4. A probe microscope according to claim 2 or 3, wherein each actuation light source (71a-e) comprises a light generator (71) configured to generate and emit light, the light generators are configured to modulate the power of the actuation light beams (52a-e) to actuate the probes, and some or all of the light generators are configured to modulate the power of their actuation light beams independently.

5. A probe microscope according to claim 2 or 3, wherein the lighting system (70) comprises two or more modulators (75a, 75c), and each modulator is configured to modulate a power of one or more of the actuation light beams.

6. A probe microscope according to claim 1, wherein the light beams are detection light beams (15a-e), the light sources are detection light sources, the probes are configured to reflect the detection light beams to generate sensing light beams (19a-e), and the probe microscope further comprises a sensing system configured to receive the sensing light beams and determine positions of the probes from the sensing light beams.

7. A probe microscope according to any of claims 2 to 5, further comprising a detection system (79) comprising a plurality of detection light sources, wherein each detection light source is configured to output a respective detection light beam (15a-e), the objective lens (18) is configured to receive the detection light beams and focus each detection light beam onto the cantilever (5a-e) of a respective one of the probes; the probes are configured to reflect the detection light beams to generate sensing light beams (19a-e); and the probe microscope further comprises a sensing system configured to receive the sensing light beams and determine positions of the probes from the sensing light beams.

8. A probe microscope according to any preceding claim, wherein each light source (71a-e) comprises means configured to reduce a numerical aperture of the light source.

9. A probe microscope according to any preceding claim, wherein each light source (71a-e) comprises a source lens (91a-e).

10. A probe microscope according to any preceding claim, wherein each light source (71a-e) comprises an optical fibre (76a-e).

11. A probe microscope according preceding claim, wherein each light source comprises a light generator (71) configured to generate and emit light.

12. A probe microscope according to claim 11, wherein each light source further comprises an optical fibre (72) which is configured to receive light from its respective light generator (71).

13. A probe microscope according to any preceding claim, wherein the light beams (15a-e, 52a-e) are parallel with each other as they exit the light sources and/or the light beams are parallel with each other as they enter the collector lens (95).

14. A probe microscope comprising: a probe array comprising: an array of probes, each probe comprising a cantilever (5a-e) and a probe tip (6a-e); a lighting system (70) comprising: one or more light generators (71) configured to generate and emit light, and an optical fibre array comprising an array of optical fibres (74a-e), wherein the optical fibre array is configured to receive the light emitted from the one or more light generators, and each optical fibre is configured to output a respective light beam; a collector lens (95) configured to collect the light beams from the optical fibres; and an objective lens (18) configured to receive the light beams from the collector lens and focus each light beam onto the cantilever (5a-e) of a respective one of the probes.

15. A method of operating a probe microscope according to any of claims 2 to 5, the method comprising actuating the probes by modulating the power of the light beams, wherein the powers of some or all of the light beams are modulated differently.

## Patentansprüche

1. Sondenmikroskop, umfassend: eine Sondenanordnung, die eine Anordnung von Sonden umfasst, wobei jede Sonde einen Träger (5a-e) und eine Sondenspitze (6a-e) umfasst; ein Beleuchtungssystem (70), das eine Vielzahl von Lichtquellen (71a-e) umfasst, wobei jede Lichtquelle dazu konfiguriert ist, einen jeweiligen Lichtstrahl (15a-e, 52a-e) auszugeben; eine Sammellinse (95), die dazu konfiguriert ist, die Lichtstrahlen von den Lichtquellen zu sammeln; und eine Objektivlinse (18), die dazu konfiguriert ist, die Lichtstrahlen von der Sammellinse zu empfangen und jeden Lichtstrahl auf den Träger einer jeweiligen der Sonden zu fokussieren.

2. Sondenmikroskop nach Anspruch 1, wobei die Lichtstrahlen Betätigungslichtstrahlen (52a-e) sind, die Lichtquellen (71a-e) Betätigungslichtquellen sind, das Beleuchtungssystem (70) dazu konfiguriert ist, eine Leistung der Betätigungslichtstrahlen zu modulieren, um die Sonden zu betätigen, und das Beleuchtungssystem dazu konfiguriert ist, die Leistung einiger oder aller der Betätigungslichtstrahlen unabhängig voneinander zu modulieren.

3. Sondenmikroskop nach Anspruch 2, wobei das Beleuchtungssystem dazu konfiguriert ist, dass die Modulation der Leistung der Betätigungslichtstrahlen bewirkt, dass sich die Träger bewegen.

4. Sondenmikroskop nach Anspruch 2 oder 3, wobei jede Betätigungslichtquelle (71a-e) einen Lichtgenerator (71) umfasst, der dazu konfiguriert ist, Licht zu erzeugen und zu emittieren, die Lichtgeneratoren dazu konfiguriert sind, die Leistung der Betätigungslichtquellen (52a-e) zu modulieren, um die Sonden zu betätigen, und einige oder alle der Lichtgeneratoren dazu konfiguriert sind, die Leistung ihrer Betätigungslichtstrahlen unabhängig voneinander zu modulieren.

5. Sondenmikroskop nach Anspruch 2 oder 3, wobei das Beleuchtungssystem (70) zwei oder mehr Modulatoren (75a, 75c) umfasst und jeder Modulator dazu konfiguriert ist, eine Leistung von einem oder mehreren der Betätigungslichtstrahlen zu modulieren.

6. Sondenmikroskop nach Anspruch 1, wobei die Lichtstrahlen Detektionslichtstrahlen (15a-e) sind, die Lichtquellen Detektionslichtquellen sind, die Sonden dazu konfiguriert sind, die Detektionslichtstrahlen zu reflektieren, um Erfassungslichtstrahlen (19a-e) zu erzeugen, und das Sondenmikroskop ferner ein Erfassungssystem umfasst, das dazu konfiguriert ist, die Erfassungslichtstrahlen zu empfangen und Positionen der Sonden anhand der Erfassungslichtstrahlen zu bestimmen.

7. Sondenmikroskop nach einem der Ansprüche 2 bis 5, ferner umfassend ein Detektionssystem (79), umfassend eine Vielzahl von Detektionslichtquellen, wobei jede Detektionslichtquelle dazu konfiguriert ist, einen jeweiligen Detektionslichtstrahl (15a-e) auszugeben, die Objektivlinse (18) dazu konfiguriert ist, die Detektionslichtstrahlen zu empfangen und jeden Detektionslichtstrahl auf den Träger (5a-e) einer jeweiligen der Sonden zu fokussieren; die Sonden dazu konfiguriert sind, die Detektionslichtstrahlen zu reflektieren, um Erfassungslichtstrahlen (19a-e) zu erzeugen; und das Sondenmikroskop ferner ein Erfassungssystem umfasst, das dazu konfiguriert ist, die Erfassungslichtstrahlen zu empfangen und Positionen der Sonden anhand der Erfassungslichtstrahlen zu bestimmen.

8. Sondenmikroskop nach einem der vorhergehenden Ansprüche, wobei jede Lichtquelle (71a-e) ein Mittel umfasst, das dazu konfiguriert ist, eine numerische Apertur der Lichtquelle zu reduzieren.

9. Sondenmikroskop nach einem der vorhergehenden Ansprüche, wobei jede Lichtquelle (71a-e) eine Quellenlinse (91a-e) umfasst.

10. Sondenmikroskop nach einem der vorhergehenden Ansprüche, wobei jede Lichtquelle (71a-e) eine optische Faser (76a-e) umfasst.

11. Sondenmikroskop nach einem der vorhergehenden Ansprüche, wobei jede Lichtquelle einen Lichtgenerator (71) umfasst, der dazu konfiguriert ist, Licht zu erzeugen und zu emittieren.

12. Sondenmikroskop nach Anspruch 11, wobei jede Lichtquelle ferner eine optische Faser (72) umfasst, die dazu konfiguriert ist, Licht von ihrem jeweiligen Lichtgenerator (71) zu empfangen.

13. Sondenmikroskop nach einem der vorhergehenden Ansprüche, wobei die Lichtstrahlen (15a-e, 52a-e) parallel zueinander sind, wenn sie die Lichtquellen verlassen, und/oder die Lichtstrahlen parallel zueinander sind, wenn sie in die Sammellinse (95) eintreten.

14. Sondenmikroskop, umfassend: eine Sondenanordnung, die Folgendes umfasst: eine Anordnung von Sonden, wobei jede Sonde einen Träger (5a-e) und eine Sondenspitze (6a-e) umfasst; ein Beleuchtungssystem (70), das Folgendes umfasst: einen oder mehrere Lichtgeneratoren (71), die dazu konfiguriert sind, Licht zu erzeugen und zu emittieren, und eine Anordnung von optischen Fasern, die eine Anordnung von optischen Fasern (74a-e) umfasst, wobei die Anordnung von optischen Fasern dazu konfiguriert ist, das von dem einen oder den mehreren Lichtgeneratoren emittierte Licht zu empfangen, und jede optische Faser dazu konfiguriert ist, einen jeweiligen Lichtstrahl auszugeben; eine Sammellinse (95), die dazu konfiguriert ist, die Lichtstrahlen von den optischen Fasern auszugeben; und eine Objektivlinse (18), die dazu konfiguriert ist, die Lichtstrahlen von der Sammellinse zu empfangen und jeden Lichtstrahl auf den Träger (5a-e) einer jeweiligen der Sonden zu fokussieren.

15. Verfahren zum Betreiben eines Sondenmikroskops nach einem der Ansprüche 2 bis 5, wobei das Verfahren Betätigen der Sonden durch Modulieren der Leistung der Lichtstrahlen umfasst, wobei die Leistungen einiger oder aller der Lichtstrahlen unterschiedlich moduliert werden.

## Revendications

1. Un microscope à sondes comprenant : un réseau sonde comprenant un réseau de sondes, chaque sonde comprenant un porte-à-faux (5a-e) et une pointe (6a-e) de sonde ; un système (70) d'éclairage comprenant une pluralité de sources (71a-e) lumineuse, dans lequel chaque source lumineuse est configurée pour sortir un faisceau (15a-e, 52a-e) respectif de lumière ; une lentille (95) collectrice configurée pour collecter les faisceaux de lumière des sources lumineuses ; et une lentille (18) d'objectif configurer pour recevoir les faisceaux de lumière de la lentille collectrice et focaliser chaque faisceau de lumière sur le porte-à-faux de l'une respective des sondes.

2. Un microscope à sondes suivant la revendication 1, dans lequel les faisceaux de lumière sont des faisceaux (52a-e) de lumière de manœuvre, les sources (71a-e) lumineuses sont des sources lumineuses de manœuvre, le système (70) d'éclairage est configuré pour moduler une énergie des faisceaux de lumière de manœuvre pour manœuvrer les sondes et le système d'éclairage est configuré pour moduler indépendamment l'énergie de certains ou de tous les faisceaux de lumière de manœuvre.

3. Un microscope à sondes suivant la revendication 2, dans lequel le système d'éclairage est configuré de manière à ce que la modulation de l'énergie des faisceaux de lumière de manœuvre fasse se déplacer les porte-à-faux.

4. Un microscope à sondes suivant la revendication 2 ou 3, dans lequel chaque source (71a-e) lumineuse de manœuvre comprend un générateur (71) de lumière, configuré pour générer et émettre de la lumière, les générateurs de lumière sont configurés pour moduler l'énergie des faisceaux (52a-e) de lumière de manœuvre afin de manœuvrer les sondes et certains ou tous les générateurs de lumière sont configurés pour moduler indépendamment l'énergie de leurs faisceaux de lumière de manœuvre.

5. Un microscope à sondes suivant la revendication 2 ou 3, dans lequel le système (70) d'éclairage comprend deux ou plusieurs modulateurs (75a, 75c) et chaque modulateur est configuré pour moduler l'énergie d'un ou de plusieurs des faisceaux de lumière de manœuvre.

6. Un microscope à sondes suivant la revendication 1, dans lequel les faisceaux de lumière sont des faisceaux (15a-e) de lumière de détection, les sources lumineuses sont des sources lumineuses de détection, les sondes sont configurées pour réfléchir des faisceaux de lumière de détection afin de créer des faisceaux (19a-e) de lumière de sondage et le microscope à sondes comprend en outre un système de sondage configuré pour recevoir les faisceaux de lumière de sondage et déterminer des positions des sondes à partir des faisceaux de lumière de sondage.

7. Un microscope à sondes suivant l'une quelconque des revendications 2 à 5, comprenant en outre un système (79) de détection comprenant une pluralité de sources lumineuses de détection, dans lequel chaque source lumineuse de détection est configurée pour sortir un faisceau (15a-e) de lumière de détection respectif, la lentille (18) d'objectif est configurée pour recevoir les faisceaux de lumière de détection et focaliser chaque faisceau de lumière de détection sur le porte-à-faux (5a-e) de l'une respective des sondes ; les sondes sont configurées pour réfléchir les faisceaux de lumière de détection pour créer des faisceaux (19a-e) de lumière de sondage ; et le microscope à sondes comprend en outre un système de sondage configuré pour recevoir les faisceaux de lumière de sondage et déterminer des positions des sondes à partir des faisceaux de lumière de sondage.

8. Un microscope à sondes suivant l'une quelconque des revendications précédentes, dans lequel chaque source (71a-e) lumineuse comprend un moyen configuré pour réduire une ouverture numérique de la source lumineuse.

9. Un microscope à sondes suivant l'une quelconque des revendications précédentes, dans lequel chaque source (71a-e) lumineuses comprend une lentille (91a-e) de source.

10. Un microscope à sondes suivant l'une quelconque des revendications précédentes, dans lequel chaque source (71a-e) lumineuse comprend une fibre (76a-e) optique.

11. Un microscope à sondes suivant l'une quelconque des revendications précédentes, dans lequel chaque source lumineuse comprend un générateur (71) de lumière configuré pour générer et émettre de la lumière.

12. Un microscope à sondes suivant la revendication 11, dans lequel chaque source lumineuse comprend en outre une fibre (72) optique, qui est configurée pour recevoir de la lumière de son générateur (71) respectif de lumière.

13. Un microscope à sondes suivant l'une quelconque des revendications précédentes, dans lequel les faisceaux (15a-e, 52a-e) de lumière sont parallèles entre eux alors qu'ils sortent des sources lumineuses et/ou les faisceaux de lumière sont parallèles entre eux alors qu'ils entrent dans la lentille (95) collectrice.

14. Un microscope à sondes comprenant : un réseau sonde comprenant : un réseau de sondes, chaque sonde comprenant un porte-à-faux (5a-e) et une pointe (6a-e) de sonde ; un système (70) d'éclairage comprenant : un ou plusieurs générateurs (71) de lumière configurés pour générer et émettre de la lumière et un réseau de fibres optiques comprenant un réseau de fibres (74a-e) optiques, dans lequel le réseau à fibre optique est configuré pour recevoir la lumière émise du un ou des plusieurs générateurs de lumière et chaque fibre optique est configuré pour sortir un faisceau respectif de lumière ; une lentille (95) collectrice configurée pour collecter les faisceaux de lumière des fibres optiques ; et une lentille (18) d'objectif configurée pour recevoir les faisceaux de lumière de la lentille collectrice et focaliser chaque faisceau de lumière sur le porte-à-faux (5a-e) de l'une respective des sondes.

15. Un procédé pour faire fonctionner un microscope à sondes suivant l'une quelconque des revendications 2 à 5, le procédé comprenant manœuvrer les sondes en modulant l'énergie des faisceaux de lumière, dans lequel les énergies de certains ou de tous les faisceaux de lumière sont modulées différemment.
